**Europäisches Patentamt**

**European Patent Office**

**Office européen des brevets**

(19)

(11) Numéro de publication: **0 199 637**
**B1**

(12) **FASCICULE DE BREVET EUROPEEN**

(45) Date de publication du fascicule du brevet:
**24.10.90**

(21) Numéro de dépôt: **86400789.3**

(22) Date de dépôt: **14.04.86**

(51) Int. Cl.⁵: **A01D 41/08**

(54) Machine pour l'égrenage de céréales sur pied.

(30) Priorité: **18.04.85 FR 8505887**

(43) Date de publication de la demande:
**29.10.86 Bulletin 86/44**

(45) Mention de la délivrance du brevet:
**24.10.90 Bulletin 90/43**

(84) Etats contractants désignés:
**DE GB IT NL**

(56) Documents cités:
**DE-A- 3 231 953**
**DE-C- 500 117**
**FR-A- 2 545 684**
**US-A- 2 853 845**
**US-A- 3 228 176**

(73) Titulaire: **CENTRE DE COOPERATION**
**INTERNATIONALE EN RECHERCHE AGRONOMIQUE**
**POUR LE DEVELOPPEMENT (C.I.R.A.D.), 42 rue**
**Scheffer, F-75116 Paris(FR)**

(72) Inventeur: **Marouze, Claude, Trousse Minou,**
**F-59730 Romeries(FR)**

(74) Mandataire: **Combe, André et al, CABINET BEAU DE**
**LOMENIE 55, rue d'Amsterdam, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet une machine pour l'égrenage de céréales sur pied.

Pour procéder à la récolte des céréales, il est connu d'utiliser des moissonneuses-batteuses; toutefois, dans ces machines à paille coupée, il se produit, lors des transferts, des accumulations de gerbes se traduisant par des débits de paille au niveau du batteur, qui sont très variables et entraînent des pointes de puissance importantes nécessitant un surdimensionnement de tous les mécanismes de la machine. Il en résulte que la machine doit être de grandes dimensions en raison des volumes transportés et présente un prix de revient élevé.

D'autre part, l'utilisation de telles machines sur de petites parcelles de terrain et pour certaines cultures tropicales, notamment la riziculture, n'est pas bien adaptée, car on ne peut réduire le nombre des organes en mouvement, donc la complexité et le poids de la machine.

L'utilisation des machines connues de grandes dimensions conduit à des coûts d'utilisation importants et d'organisation de chantier difficile.

Pour récolter des céréales dans les conditions mentionnées ci-dessus, il est également connu d'utiliser des égreneuses sur pied à batteur transversal, dans lesquelles les pailles sont soumises à un moyen qui procède à l'arrachement des grains, alors que la paille reste solidaire du sol.

Toutefois, ces machines dont le batteur est transversal présentent des inconvénients en ce qui concerne le travail des récoltes versées et les pertes de grains que l'on constate avec ces machines.

Par ailleurs, le mouvement des pailles entre la sortie et l'entrée par exemple se croise ou s'oppose lors de leur passage dans la machine, c'est le cas notamment dans le US-A 3 228 176 qui décrit une machine dans laquelle le batteur est de forme générale conique et est disposé sur le même axe que le dispositif d'amenée. L'étancheité du bas de la chambre de battage est réalisée au moyen de déflecteurs. Pendant le battage, les pailles sont nécessairement recourbées et les vitesses de battage et d'alimentation ne sont pas indépendantes. Par ailleurs, compte tenu de l'inclinaison du batteur et de la répartition régulière sur celui-ci des mêmes éléments batteurs, on obtient avec cette machine un battage du bas des pailles à l'avant et du haut des pailles à l'arrière du batteur.

Pour remédier aux inconvénients précédents, la présente invention propose une machine égreneuse de céréales sur pied avec un batteur longitudinal n'utilisant pas la coupe de paille. Conformément à la présente invention, la machine comprend un châssis mobile portant à l'avant par rapport à son sens de déplacement un moyen diviseur permettant d'isoler une bande de paille de céréales, un moyen pour amener ladite paille à l'entrée d'une chambre de battage des grains de céréale, montée sur ledit châssis et renfermant au moins un batteur dont l'axe est entraîné en rotation par un organe moteur, ledit batteur est un batteur cylindrique dont l'axe est disposé sensiblement horizontalement et qui porte à écarté

tements irréguliers sur son pourtour et sur toute sa longueur des éléments batteurs d'agressivité croissante d'avant en arrière qui coopèrent avec un contre-batteur entourant le batteur à une distance légèrement supérieure à la longueur des éléments batteurs et s'étendant sur toute la longueur du batteur et sur au moins une partie de sa périphérie, ladite chambre de battage comportant à sa partie inférieure au moins un moyen d'évacuation du grain vers un couloir de transport et une trémie de stockage disposée à l'arrière du châssis et sur tout ou partie de sa longueur une ouverture, pour le passage de la paille.

Selon une autre caractéristique de l'invention, l'ouverture pour le passage de la paille est munie d'une bavette en matériau déformable fixée par l'un de ses bords longitudinaux sur la paroi de ladite chambre de battage.

La machine suivant l'invention peut utiliser des moyens diviseurs et ameneurs permettant de travailler dans les récoltes versées, de récolter des champs semés en ligne ou à la volée, de travailler le champ en tous sens.

La machine pout présenter une longueur de battage importante (égale ou sensiblement égale à la longueur du batteur) permettant des vitesses d'avancement élevées.

Le déplacement des pailles est perpendiculaire au mouvement des éléments batteurs et il n'y a pas de mouvement relatif entre les tiges des pailles. Le déplacement des pailles peut être très rapide, donc les vitesses d'avancement de la machine importantes.

Les vitesses d'avancement et de battage peuvent être indépendantes.

Comme la chambre de battage peut être une enceinte presque fermée, le battage peut être très énergique tout en assurant des taux de perte faibles et des vitesses d'avancement élevées.

Chaque module travaille une largeur donnée. Dans des conditions de récolte données, le débit de la machine est directement fonction de la vitesse d'avancement. L'entrée et la sortie des pailles ne peuvent être ni avancées ni retardées, car elles sont tenues au sol. Le débit instantané de la machine est donc parfaitement dosé. Cette régularité d'alimentation et de flux de produit ordonné rapide et ininterrompu se traduisent par un couple résistant sur le batteur très régulier, ce qui limite le surdimensionnement de la transmission.

D'autre part, il n'y a pas de risque de bourrage, car les pailles ne peuvent s'accumuler en un point quelconque de la machine, car le flux de paille entrant dans la machine est égale à tout instant de marche au flux sortant. La capacité de la machine n'est donc pas limitée par des bourrages intempestifs.

Le flux de tige à battre par module est défini en fonction de la largeur de la vitesse et des conditions de récolte. Mais le lit de paille situé entre les éléments batteurs reste toujours mince, même si la vitesse d'avancement est élevée. Le batteur garde toujours son efficacité. D'autre part, l'égrenage, c'est-à-dire la séparation grain-paille, se fait sur pied dès le battage, la paille restant attachée au sol pendant que le grain est arraché; il n'est pas nécessaire de brasser des volumes importants et de disposer de surfaces importantes pour assurer la séparation grain-paille.

La machine peut absorber des récoltes à très haut rendement car il n'y pas de bourrage et la séparation du grain de la paille est faite au moment du battage. Le grain ne doit pas traverser un lit de paille.

La quantité de produit battu est beaucoup plus faible que dans les machines à pailles traversantes, car on ne bat que la partie haute des pailles qui rentre dans la chambre de battage, d'où un principe très économe en énergie.

Le battage des épis s'effectue entre les boucles, le jeu entre le batteur et le contre-batteur n'influe pas sur le battage comme dans les machines à pailles traversantes, où il doit être précis, progressif et adapté à la nature du produit battu et à son débit.

Ce jeu dans le cas du batteur à doigts ou à boucles ne nécessite pas une grande précision, ce qui limite les coûts de fabrication.

D'autre part, on peut adapter la vitesse du battage pour différentes natures de produits.

On obtient un battage beaucoup plus doux, qui est dû au fait que les boucles viennent frotter sur les épis et non pas les laminer entre un organe de battage et un organe de contre-battage. Par ailleurs, l'efficacité du batteur s'accrôit entre la partie avant qui est plus douce et la partie arrière qui doit être plus agressive pour arracher les derniers grains.

Le dispositif suivant l'invention comportant des moyens mécaniques très simples, il est possible de monter un module de battage de taille réduite pour réaliser une petite machine de récolte très simple pouvant être considérée comme la plus petite unité de récolte directe. Il est également possible de monter plusieurs batteurs identiques côte à côte pour obtenir des machines de grande capacité.

D'autres caractéristiques et avantages de l'invention ressortiront de la description qui va suivre de plusieurs modes de réalisation et en se référant aux dessins annexés sur lesquels:

La figure 1 est une vue en plan de l'ensemble d'une machine pour l'égrenage de céréales sur pied suivant l'invention.

La figure 1a est une vue en élévation latérale de la machine.

La figure 2 est une vue en élévation latérale du dispositif d'amenage.

La figure 3 est une vue en coupe frontale du dispositif à l'entrée du batteur.

La figure 4 est une vue en coupe transversale au niveau des diviseurs.

La figure 5 est une vue en coupe transversale au milieu de l'ameneur.

La figure 6 est une vue en coupe transversale avant la chambre de battage.

La figure 7 est une vue en élévation latérale d'une mode de réalisation du batteur.

La figure 8 est une vue en élévation et en coupe du batteur.

La figure 9 est une vue en élévation et en coupe transversale d'un mode de réalisation de la chambre de battage et du contre-batteur.

La figure 10 est une vue en élévation et en coupe transversale d'un autre mode de réalisation de la chambre de battage et du contre-batteur.

Les figures 11, 11a sont des vues de détail montrant un type de boucles avant et arrière du batteur.

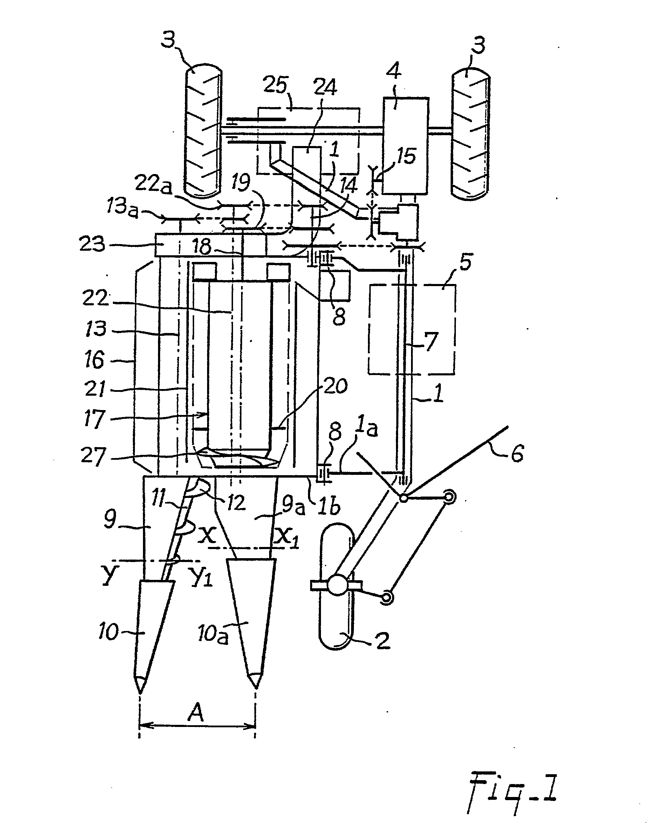

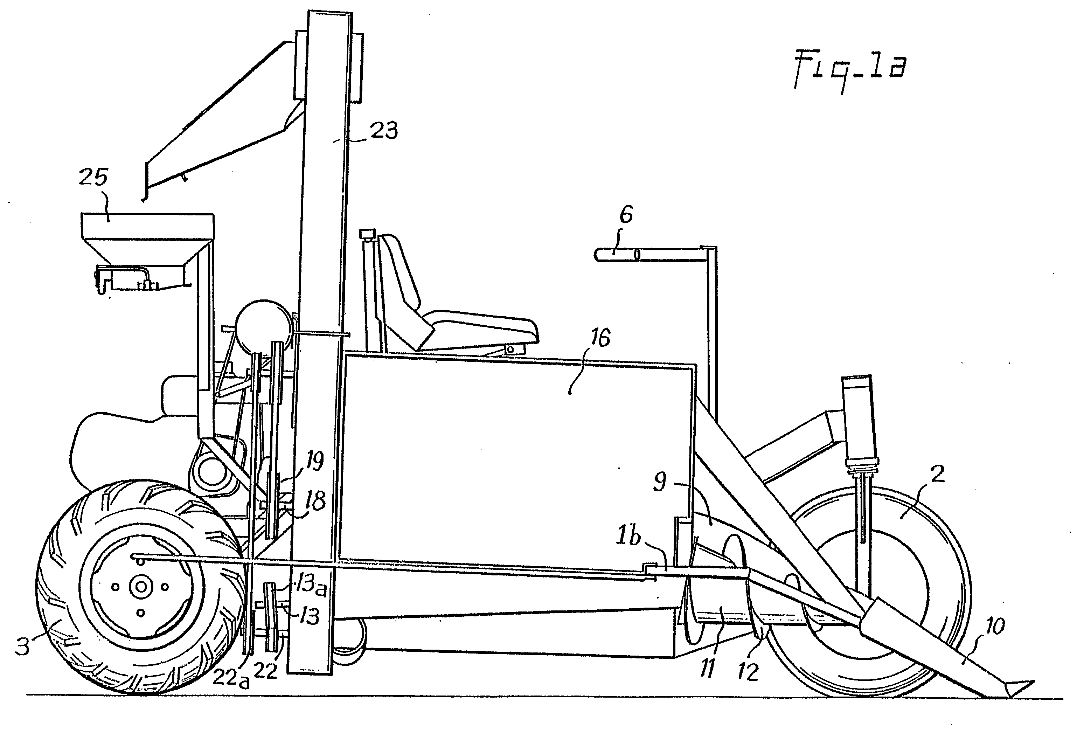

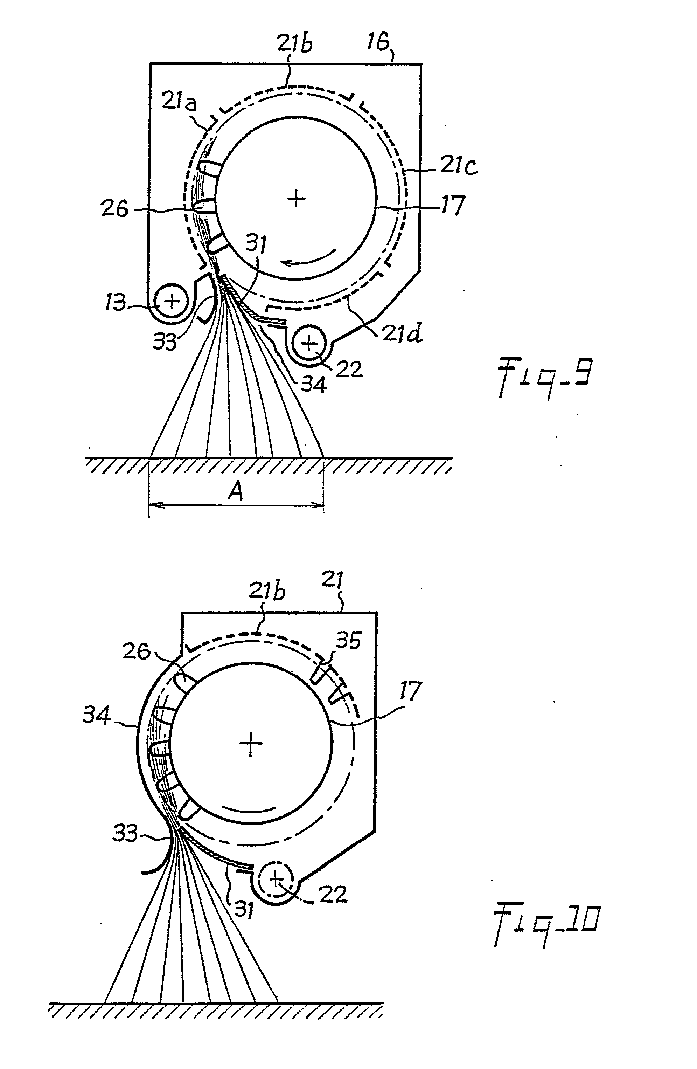

Aux figures 1, 1a on a représenté une machine pour l'égrenage de céréales sur pied qui ne comporte qu'un seul module de battage. Cette machine comprend un châssis dont une partie 1 repose sur des roues 2 et 3 dont l'une 2 est directrice, et les autres 3 sont motrices, et reliées à un moteur 4 qui assure l'entraînement des roues 3 pour le déplacement de la machine et celui des organes de la machine qui seront décrits ultérieurement. Sur la partie 1 du châssis est fixé un siège 5 pour l'utilisateur qui dirige la machine au moyen d'un guidon 6 dirigeant la roue avant 2. La partie 1 du châssis est reliée par une partie articulée de liaison 1a à une partie 1b du châssis portant le module de battage, la partie 1a est articulée, d'une part, sur la partie 1 au moyen d'un axe horizontal 7 et, d'autre part, sur la partie porteuse 1b au moyen d'axes horizontaux 8. Cette disposition permet de régler la hauteur du module de récolte et de battage suivant la récolte et le terrain. A l'avant de la partie 1b du châssis sont montés deux organes de support 9, 9a écartés l'un de l'autre et lesquels sont articulés autour d'un axe horizontal XX1 et YY1 deux organes diviseurs 10, 10a de forme conique qui sont séparés à leur extrémité antérieure d'une distance réglable A correspondant à la largeur de travail pour isoler la bande de paille qui sera battue (Fig.1 et 4). A la suite de l'un des organes diviseurs 10 est monté rotatif un organe ameneur 11 (Fig. 1, 1a, 2, 3, 7) qui est constitué d'un élément cylindro-conique dont la pointe est tournée vers l'avant et qui est muni sur sa face extérieure d'une hélice 12, ledit organe ameneur étant entraîné en rotation par un arbre 13 d'une vis sans fin de transport qui sera décrite ultérieurement. L'arbre 13 est relié par une transmission à courroie 14 à un arbre de sortie 15 du moteur 4. A l'arrière de l'ameneur est disposée (Fig.1, 1a) une chambre de battage 16 fixée sur la partie 1b du châssis et renfermant un batteur 17 constitué d'un tambour cylindrique dont l'axe de rotation 18 est sensiblement horizontal, et qui est entraîné en rotation par une poulie 19 reliée à la transmission 14 et au moteur 4. Le batteur 17 porte sur son pourtour et sur toute sa longueur des doigts 20 ou boucles 26 (Fig. 1,7) qui s'étendent radialement à partir de la surface dudit tambour, et qui coopèrent avec un contre-batteur 21 entourant le batteur 17 à une distance légèrement supérieure à la longueur des doigts 20 ou boules 26 et s'étendant sur toute la longueur du batteur et sur au moins une partie de sa périphérie.

La chambre de battage 16 comporte à sa partie inférieure deux vis sans fin 13 et 22 (Fig. 1 et 9) qui sont entraînées en rotation par des poulies 13a et 22a reliées par la transmission 14 au moteur 4. Les vis sans fin 13 et 22 assurent l'évacuation des grains vers le couloir de transport 23 qui par la goulotte de descente 24 sont stockés dans la trémie 25.

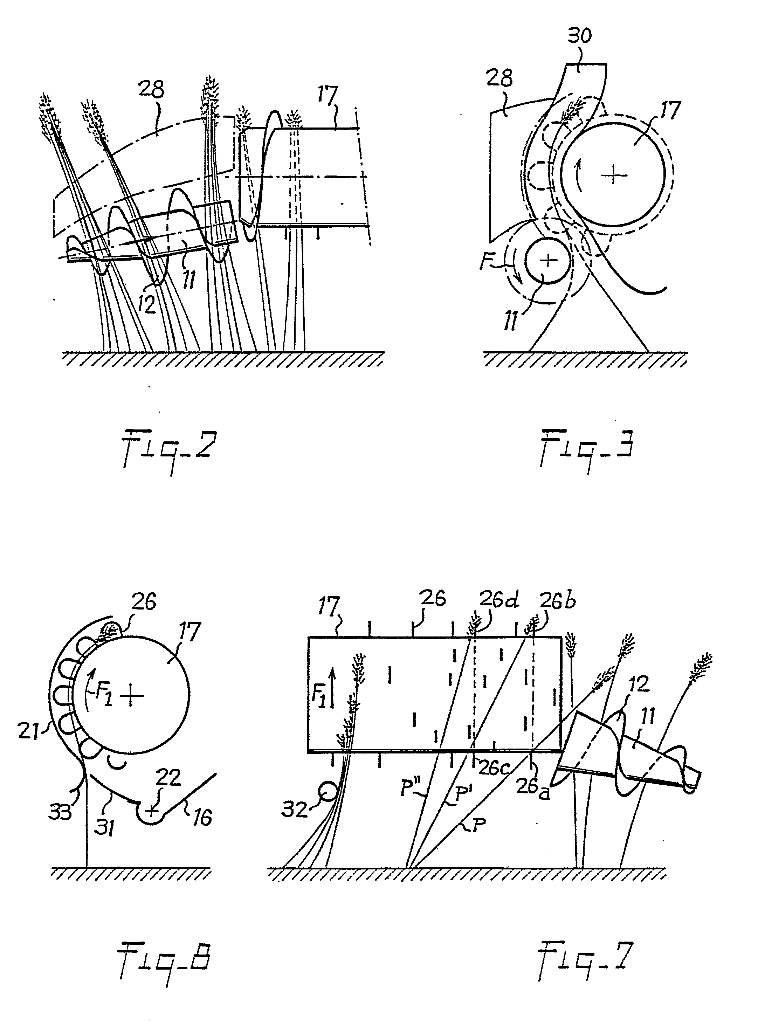

L'organe ameneur 11 tourne dans le sens indiqué par la flèche F de telle manière que la vitesse de l'hélice 12, en contact avec les pailles, soit dirigée vers le haut. La rotation de l'organe ameneur 11 entraîne un déplacement axial pour chaque pas doublé d'un glissement de l'hélice sur les pailles (Fig. 2,3,5). Ce glissement tend à relever les pailles versées. Le déplacement axial de l'hélice 12 pousse les pailles vers le batteur 17. La vitesse axiale doit être supérieure à la vitesse d'avancement de la machine pour compenser les frottements des pailles sur les tôles des diviseurs (Fig.2 et 4). Les pailles doivent être assemblées dans un plan vertical perpendiculaire au déplacement au niveau de l'entrée du batteur 17 (Fig. 2 et 6). L'ameneur 11 pousse les pailles jusqu'à l'entrée du batteur 17 de telle manière que les pailles sont reprises immédiatement par les premiers éléments qui sont soit des boucles telles que 26 (Fig.8), soit une hélice 27 montée à l'entrée du batteur (Fig. 1 et 2).

Dans le cas d'une hélice 27, celle-ci doit pousser axialement les produits vers l'arrière, le pas de celle-ci étant établi pour provoquer une survitesse axiale par rapport à la vitesse d'avancement pour des vitesses d'avancement et de batteur moyennes.

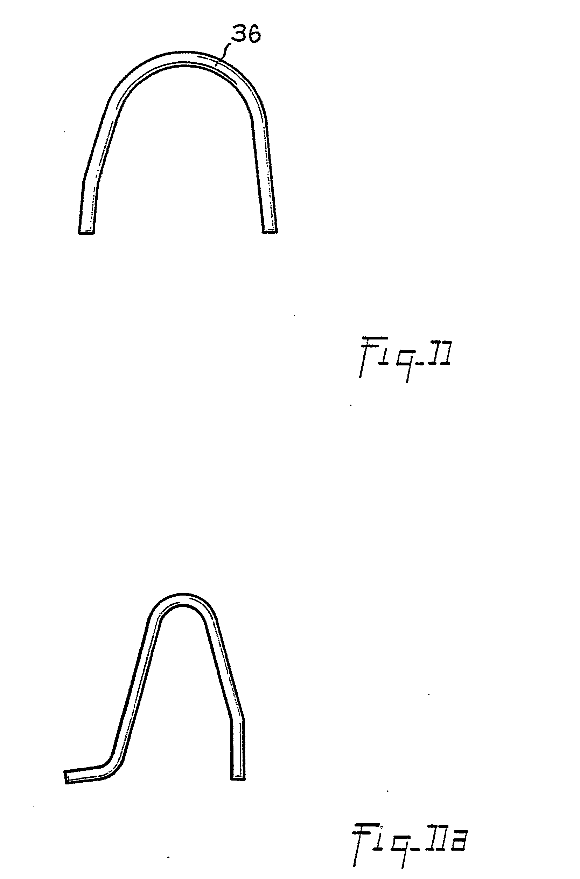

Cette hélice 27, qui peut être en plusieurs parties, évite le battage juste à l'entrée du batteur, ce qui limite les pertes par projection de grains. Une paroi en tôle 28 (Fig. 5) placée au-dessus en l'organe ameneur 11 guide les parties hautes des pailles. En regard de cette paroi 28 et de l'organe ameneur 11, est disposée une paroi en tôle 29 guidant les pailles sur le côté gauche (dans le sens de la marche) de la bande récoltée.

On peut comme sur le côté droit placer sous cette paroi 29 un ameneur, tournant en sens inverse de l'autre et de pas contraire, de telle manière que la vitesse de l'hélice en contact avec les pailles, soit dirigée vers le haut. L'organe ameneur incliné offre une plus grande efficacité que l'organe ameneur dont l'axe est horizontal.

Il est évident que l'organe ameneur de forme conique ou cylindro-conique peut être remplacé par un tout autre moyen, et notamment des chaînes à doigts.

La vitesse de l'organe ameneur est fonction de la vitesse d'avancement, mais il n'est pas obligatoire qu'elle soit directement proportionnelle (survitesse pouvant varier de 20% à 100%).

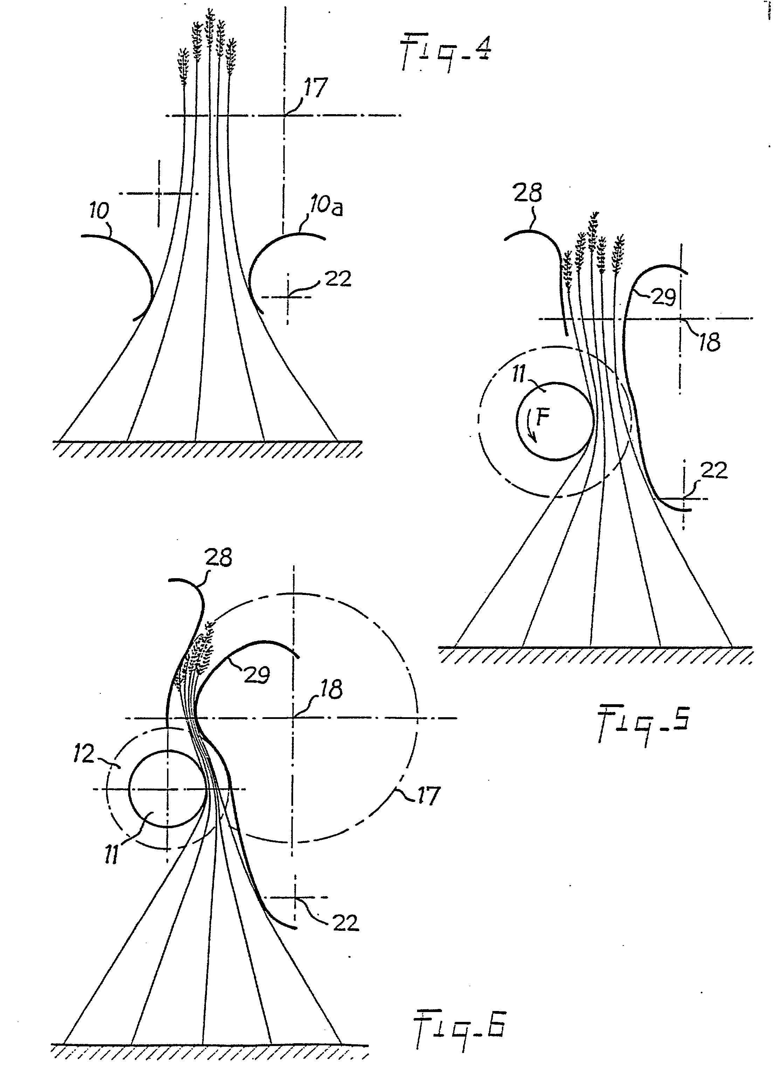

Pour l'entrée des pailles dans la chambre de battage (Fig. 3), celle-ci est pourvue sur sa face avant d'une ouverture 30 qui épouse en partie la courbure du batteur 17, et se prolonge vers le haut par une partie presque verticale. Les pailles sont très peu courbées avant l'entrée dans la chambre de battage, elles sont donc peu sollicitées et rentrent plus facilement, de telle sorte que les pertes de grains sont réduites.

Les pailles sont enroulées suivant la forme du batteur 17 à l'intérieur de la chambre de battage; la forme du contre-batteur 21 est progressive entre l'ouverture 30 de la face avant et l'intérieur de la chambre. La partie supérieure de l'ouverture de la face avant peut être fermée par une ou plusieurs bavettes souples qui peuvent s'effacer pour laisser passer les pailles hautes, mais empêchent la projection vers l'extérieur des grains arrachés par le batteur. Ce dispositif est très intéressant lorsque la hauteur des pailles est variable, ou lorsque les pailles sont versées.

Lorsque les pailles sont engagées dans la chambre de battage 16 (Fig. 7,8), elles occupent l'espace entre la virole du batteur 17 et le contre-batteur 21, ledit espace comportant les boucles 26 ou autres éléments batteurs tels que des doigts. A la partie inférieure de la chambre de battage 16, il est prévu une ouverture longitudinale qui est fermée par une bavette 31 provoquant un frottement sur les pailles. La bavette 31 assure l'étanchéité dans la partie inférieure de la chambre de battage 16. Elle s'écarte légèrement pour laisser passer les pailles P. La raideur de la bavette 31 qui est constituée d'un élément déformable, assure son appui sur le bord 33 de la chambre 16 délimitant l'ouverture pour le passage des pailles et l'écartement est proportionnel à la quantité de pailles engagées dans la chambre de battage.

A l'avant la bavette 31 n'est pas plaquée sur la paroi de la chambre laissant un dégagement permettant l'entrée des pailles. Du fait de l'avancement de la machine par rapport au sol, les pailles P peuvent être entraînées par la machine et, dans ce cas, elles sont inclinées vers l'avant de la machine et pourraient, dans un cas extrême, s'échapper de la chambre de battage 16 par sa partie inférieure. Le sens de rotation F1 du batteur 17 et le frottement des pailles sur les boucles 26 provoquent une traction sur les tiges (relativement légère). Les pailles P restent tendues dès qu'elles sont en contact avec les boucles 26.

La vitesse périphérique du batteur 17 est assez élevée, 10 à 15 m/s, alors que la vitesse d'avancement de la machine est de l'ordre de 1 à 2 m/s. De ce fait, le mouvement des boucles 26 est de l'ordre de 10 fois supérieur à celui de l'avancement.

Sur les figures 7 et 8, la machine est fixe et les pailles occupent des positions successives correspondant au déplacement relatif par rapport à la machine. Dans ce cas les pailles, ou tout au moins leurs pieds, se déplacent de droite à gauche.

En supposant qu'une paille P se trouve dans une position inclinée provoquée par les différents frottements exercés sur cette tige, la boucle 26a happe la tige P et le mouvement du batteur 17 déplace la boucle de 26a en 26b entraînant la tige en position P'.

La paille est ensuite prise par la boucle 26c qui se déplace en 26d et la tige se trouve alors en position P". Etant donné le nombre de boucles, le mouvement de relevage des pailles est très rapide et les pailles sont donc toujours dans un plan presque vertical perpendiculaire au déplacement de la machine. Le phénomène se produit quelle que soit la vitesse d'avancement ou du batteur 17, et à l'arrière de la machine les pailles P viennent en butée contre un déflecteur 32. Elles s'échappent vers le bas en glissant entre la tôle 33 prolongeant le contre-batteur et la bavette 31.

D'autres dispositions sont également possibles pour permettre la sortie des pailles de la chambre de battage. Par exemple il est possible de prévoir une ouverture à l'arrière qui est semblable à celle prévue sur la face avant. Dans ce cas il faut assurer l'étanchéité, et il peut être difficile d'assurer l'évacuation des produits récoltés.

Dans le mode de réalisation représenté à la figure 9, le contre-batteur 21, qui est constitué d'une tôle perforée, comporte quatre parties 21a, 21b, 21c, 21d qui entourent le batteur sur toute sa périphérie et sur toute sa longueur. Les pailles sont maintenues sur le batteur 17 au moyen de la première partie 21a du contre-batteur et en partie au moyen de la seconde partie 21b. Différents produits sont arrachés aux pailles, tels que des grains, des ensembles de plusieurs grains et de la paille. Ces produits sont animés d'une certaine vitesse au moment de leur décrochement. La première partie 21a du contre-batteur étant perforée, une partie des grains la traverse et va rejoindre la vis sans fin 13, le reste des produits tournant avec le batteur 17.

Les éléments les plus petits, tels que des grains et des balles, traversent les différentes parties du contre-batteur 21 et les produits les plus encombrants tels que les pailles, les épis entiers continuent de tourner avec le batteur 17 en faisant plusieurs tours. Une sortie doit être prévue à l'arrière pour sortir les pailles.

Le grain rejoint les vis sans fin 13 et 22 de manière à récupérer celui-ci à l'arrière de la chambre 16 avec différents dispositifs.

Le produit obtenu est relativement propre, car il comporte peu de produits longs. Les produits longs sont transférés vers l'arrière de la chambre 16 et dans ce but on utilise les troisième partie 21c et quatrième partie 21d du contre-batteur en utilisant des déflecteurs.

Le dispositif permettant d'entraîner sur plusieurs tours les produits arrachés autour du batteur, il est ainsi possible de rebattre les épis arrachés aux pailles.

L'efficacité de la séparation dépend des perforations des éléments du contre-batteur et de leur agressivité (capacité à freiner les produits en mouvement).

Si la première partie 21a du contre-batteur est remplacée par une paroi pleine 34 (Fig. 10) tous les grains sont entraînés par le batteur 17, et la vis sans fin 13 de transport des grains est inutile. La paroi pleine 34 du contre-batteur peut faire partie de la chambre de battage 21. Les troisième 21c et quatrième 21d parties du contre-batteur peuvent être supprimées, et dans ce cas les produits sont rejetés directement dans la vis sans fin de transport 22.

Il est possible, en particulier dans ce dernier cas (Fig. 10), d'assurer un battage des produits libres arrachés par le batteur en disposant des rangs de contre-doigts 35 qui sont fixés sur la seconde partie 21b du contre-batteur. La disposition des boucles 26 doit être prévue pour assurer le passage des contre-doigts 35.

En ce qui concerne le batteur 17, celui-ci est équipé dans un mode de réalisation particulier de boucles 26 réalisées en fil présentant la forme d'un U inversé, et elles sont fixées notamment par soudure sur la virole cylindrique ou tambour du batteur 17.

A l'avant du batteur, on dispose des boucles 36 (fig. 11) qui sont plus larges et plus arrondies, alors que, à l'arrière du batteur, les boucles 37 (fig. 11a) présentent une forme plus rectiligne avec deux branches faisant entre elles un angle aigu. Les boucles 37 sont beaucoup plus agressives par rapport à l'arrachage du grain que les boucles 36 situées à l'avant du batteur. Le diamètre du fil, la densité des boulces et leur inclinaison par rapport au déplacement jouent également un rôle dans l'efficacité du batteur. La partie avant de la virole du batteur peut être conique afin d'augmenter la largeur de l'entrée des pailles.

Dans le cas d'un batteur à doigts, les boucles sont remplacées par des tiges rondes radiales ou inclinées vers l'arrière. Les éléments batteurs peuvent être aussi des barres striées, axiales ou radiales.

Il est également possible d'utiliser un batteur qui est constitué par une brosse pleine et, dans cas, l'entrée des pailles soit être assurée par un dispositif adapté en conséquence.

**Revendications**

1. Machine pour l'égrenage de céréales sur pied, à batteur longitudinal, du type qui comprend un châssis mobile (1, 1a, 1b) portant à l'avant par rapport à son sens de déplacement un moyen diviseur (10, 10a) permettant d'isoler une bande de paille de céréale, un moyen (11, 12) pour amener ladite paille à l'entrée d'une chambre (16) de battage des grains de céréale, montée sur ledit châssis et renfermant au moins un batteur (17) dont l'axe est entraîné en rotation par un organe moteur (4), le batteur ayant des éléments batteurs (26) sur son pourtour, qui coopèrent avec un contre-batteur (21) entourant le batteur (17) à une distance légèrement supérieure à la longueur des éléments batteurs (26) et s'étendant sur au moins une partie de sa périphérie, ladite chambre de battage (16) ayant sur tout ou partie de sa longueur une ouverture pour le passage de la partie, caractérisé en ce que ledit batteur (17) est un batteur cylindrique dont l'axe est disposé sensiblement horizontalement et qui porte à écartements irréguliers sur son pourtour et sur toute la longueur, les éléments batteurs (26) qui sont d'agressivité croissante d'avant en arrière, et en ce que le contre-batteur (21) s'étend sur toute la longueur du batteur (17), ladite chambre de battage (16) comportant à sa partie inférieure, au moins un moyen d'évacuation du grain (13, 22) vers un couloir de transport (23) et une trémie de stockage (25) disposée à l'arrière du châssis.

2. Machine selon la revendication 1, caractérisée en ce que ladite ouverture pour le passage de la paille est munie d'une bavette (31) en matériau déformable fixée par l'un de ses bords longitudinaux sur la paroi de ladite chambre de battage (16).

3. Machine suivant la revendication 1, caractérisée en ce que le châssis de la machine comporte trois parties sont une première partie (1a) repose sur le sol au moyen de roues (2, 3) et comporte un poste de conduite (5), un poste d'ensachage et un organe moteur (4) d'entraînement des roues et des accessoires de la machine, la première partie (1a) du châssis portant de façon articulée au moyen d'une partie de liaison (1a) une troisème partie (1b) de châssis réglable en hauteur par rapport à la première et portant la chambre de battage (16).

4. Machine suivant la revendication 1, caractérisée en ce que le moyen diviseur est constitué de deux éléments (10, 10a) de forme sensiblement conique articulés suivant un axe horizontal sur deux organes de support (9, 9a) solidaires du châssis (1b), portant la chambre de battage (16) et disposés de part et d'autre de l'entrée de ladite chambre.

5. Machine suivant les revendications 1 et 4, caractérisée en ce qu'à la suite d'au moins l'un des organes diviseurs (10) est monté rotatif un organe ameneur constitué d'un élément cylindrique conique (11) muni sur sa face extérieure d'une hélice (12), ledit élément conique (11) étant inclinable et relié par un cardan à un moyen d'entraînement, un élément de guidage en tôle étant disposé au-dessus de l'élément conique.

6. Machine suivant la revendication 1, caractérisée en ce que le batteur (17) qui est constitué d'un tambour cylindrique présente une entrée conique munie d'une hélice (27) de guidage des panicules ou d'une succession de boucles disposées en hélice.

7. Machine suivant la revendication 1, caractérisée en ce que le batteur (17) qui est constitué d'un tambour cylindrique est muni sur sa surface extérieure, sur sa longueur et sur tout son pourtour de boucles espacées (26) qui s'étendent radialement à partir de la surface dutit tambour.

8. Machine suivant la revendication 1, caractérisée en ce que le contre-batteur (21) est constitué d'une tôle perforée qui s'étend sur tout le pourtour du tambour cylindrique du batteur (17), et en ce que la machine comprend deux vis sans fin (13, 22) d'évacuation des grains qui sont disposées dans le fond de la chambre de battage (16) de part et d'autre de l'ouverture (30) de passage de la paille.

9. Machine suivant la revendication 1, caractérisée en ce que le contre-batteur est constitué d'une tôle pleine (34) qui s'étend sur une partie du pourtour du tambour de battage (17), et il présente des contre-doigts (35) qui coopèrent avec les doigts ou boucles (26) du batteur (17).

10. Machine suivant la revendication 1, caractérisée en ce que le batteur (17) est constitué d'un tambour muni sur sa périphérie de doigts constitués par des tiges rondes radiales ou inclinées vers l'arrière.

11. Machine suivant la revendication 1, caractérisée en ce que la batteur est constitué d'une brosse pleine.

12. Machine suivant la revendication 1, caractérisée en ce que la machine est constituée de plusieurs modules de battage (16) disposés côte à côte pour obtenir une machine présentant une grande largeur et une grande capacité.

13. Machine suivant la revendication 1, caractérisée en ce que le diviseur et l'ameneur présentent une inclinaison et une forme telle que l'on ait un relevage des pailles très progressif.

14. Machine suivant la revendication 1, caractérisée en ce que les éléments batteurs sont constitués de barres striées, axiales ou radiales.

## Claims

1. Machine for harvesting kernels of grain from standing stalks, with a longitudinal thresher, of the type which comprises a movable frame (1, 1a, 1b) carrying, at the front in relation to its direction of movement, a divider means (10, 10a) making it possible to isolate a strip of grain straw, and a means (11, 12) for delivering the said straw to the entrance of a chamber (16) for threshing the grain kernels, mounted on the said frame and containing at least one thresher (17), the axis of which is driven in rotation by a drive member (4), the thresher having threshing elements (26) on its perimeter, which interact with a counter-thresher (21) surrounding the thresher (17) at a distance slightly greater than the length of the threshing elements (26) and extending over at least some of its periphery, the said threshing chamber (16) having over some or all of its length an orifice for the passage of the straw, characterized in that the said thresher (17) is a cylindrical thresher, the axis of which is arranged substantially horizontally and which, at irregular spacings on its perimeter and over its entire length, carries the threshing elements (26) which are of an aggressiveness increasing from the front rearwards, and in that the counter-thresher (21) extends over the entire length of the thresher (17), the said threshing chamber (16) having, in its lower part, at least one means (13, 22) for discharging the kernels towards a transport corridor (23) and a storage hopper (25) located at the rear of the frame.

2. Machine according to Claim 1, characterized in that the said orifice for the passage of the straw is equipped with a flap (31) made of deformable material, fastened at one of its longitudinal edges to the wall of the said threshing chamber (16).

3. Machine according to Claim 1, characterized in that the frame of the machine comprises three parts, of which a first part (1a) rests on the ground by mreans of wheels (2, 3) and comprises a driver's cab (5), a bagging station and a drive member (4) for driving the wheels and accessories of the machine, the first part (1a) of the frame carrying in an articulated manner, by means of a connecting part (1a) a third frame part (1b) vertically adjustable relative to the first and carrying the threshing chamber (16).

4. Machine according to Claim 1, characterized in that the divider means consists of two elements (10, 10a) of substantially conical form which are articulated according to a horizontal axis on two supporting members (9, 9a) fixed to the frame (1b) carrying the threshing chamber (16) and which are arranged on either side of the entrance of the said chamber.

5. Machine according to Claim 1 and 4, characterized in that mounted rotatably after at least one of the divider members (10) is a delivery member consisting of a conical cylindrical element (11) equipped with a helix (12) on its outer face, the said conical element (11) being inclinable and connected to a driving means by a cardan transmission, a sheet-metal guide element being arranged above the conical element.

6. Machine according to Claim 1, characterized in that the thresher (17), which consists of a cylindrical drum, has a conical entrance equipped with a helix (27) for guiding the panicles or with a succession of loops arranged helically.

7. Machine according to Claim 1, characterized in that the thresher (17), which consists of a cylindrical drum, is equipped on its outer surface, over its length and on its entire perimeter, with spaced loops (26) which extend radially from the surface of the said drum.

8. Machine according to Claim 1, characterized in that the counter-thresher (21) consists of a perforated metal sheet which extends over the entire perimeter of the cylindrical drum of the thresher (17), and in that the machine comprises two endless screws (13, 22) for the discharge of the kernels, which are arranged in the bottom of the threshing chamber (16) on either side of the orifice (30) for the passage of the straw.

9. Machine according to Claim 1, characterized in that the counter-thresher consists of a solid metal sheet (34) which extends over some of the perimeter of the threshing drum (17), and it has counter-fingers (35) which interact with the fingers or loops (26) of the thresher (17).

10. Machine according to Claim 1, characterized in that the thresher (17) consists of a drum equipped, on its periphery, with fingers consisting of round rods which are radial or inclined rearwards.

11. Machine according to Claim 1, characterized in that the thresher consists of a solid brush.

12. Machine according to Claim 1, characterized in that the machine consists of a plurality of threshing modules (16) arranged side by side, to obtain a machine having a large width and a high capacity.

13. Machine according to Claim 1, characterized in that the divider and the deliverer have an inclination and form such that a highly progressive pickup of the straws is obtained.

14. Machine according to Claim 1, characterized in that the threshing elements consist of axial or radial grooved bars.

**Patentansprüche**

1. Maschine zum Dreschen stehender Halmfrüchte mit einer länglichen Dreschtrommel, wobei die Maschine ein bewegliches Chassis (1, 1a, 1b) aufweist, das in Fahrtrichtung vorne Trennmittel (10, 10a) trägt, die das Isolieren eines Büschels der Halme der Halmfrüchte erlauben, ein Mittel (11, 12) zur Beförderung des Halmes zum Einlaß einer Kammer (16) zum Drusch der Körner der Halmfrüchte, wobei die Kammer auf dem Chassis angebracht ist und zumindest eine Dreschtrommel (17), deren Achse durch ein Motormittel (4) in Rotation versetzt wird, umschließt, wobei die Dreschtrommel auf ihrem Umfang Dreschelemente (26) hat, die mit einer Gegendreschtrommel (21) zusammenwirken, die die Dreschtrommel (17) in einem Abstand umgibt, der ein wenig größer ist als die Länge der Dreschelemente (26) und die sich über zumindest einen Teil ihres Umfanges erstreckt, und wobei die Dreschkammer (16) über ihre gesamte Länge oder einen Teil ihrer Länge hin eine Öffnung zum Durchlassen der Halme hat, dadurch gekennzeichnet, daß die Dreschtrommel (17) eine zylindrische Dreschtrommel ist, deren Achse in etwa horizontal verläuft und die in über den Umfang unregelmäßigen Abständen und über die gesamte Länge hin die Dreschmittel (26) trägt, die eine von vorne nach hinten steigende Wirksamkeit aufweisen, und dadurch, daß die Gegendreschtrommel (21) sich über die gesamte Länge der Dreschtrommel (17) erstreckt, wobei die Dreschkammer (16) in ihrem Inneren zumindest ein Mittel zum Abtransport des Kornes (13, 22) zu einem Transportgang (23) hin sowie einen am Chassis hinten angebrachten Einfülltrichter (25) aufweist.

2. Maschine nach Anspruch 1, dadurch gekennzeichnet, daß die Öffnung zum Durchlassen der Halme mit einer Schürze (31) aus verformbarem Material versehen ist, die mit der einen ihrer Längskanten an der Seitenwand der Dreschkammer (16) befestigt ist.

3. Maschine nach Anspruch 1, dadurch gekennzeichnet, daß das Chassis der Maschine drei Abschnitte aufweist, wovon der erste Abschnitt (1a) mittels Rädern (2, 3) auf dem Boden ruht und einen Führerstand (5), einen Absack-Stand und ein Motormittel (4) zum Antreiben der Räder und des Zubehörs der Maschine aufweist, wobei der erste Abschnitt (1a) des Chassis einen mittels eines Verbindungsabschnittes (1a) gelenkig angebrachten dritten Abschnitt (1b) des Chassis trägt, der in seiner Höhe in bezug auf den ersten Abschnitt einstellbar ist und die Dreschkammer (16) trägt.

4. Maschine nach Anspruch 1, dadurch gekennzeichnet, daß das Trennmittel durch zwei Elemente (10, 10a) annähernd konischer Form gebildet wird, die längs einer horizontalen Achse gelenkig mit zwei Trageinrichtungen (9, 9a) verbunden sind, die an dem Chassis (1b) befestigt sind, wobei die Trageinrichtungen die Dreschkammer (16) tragen und beidseitig des Einlasses der Kammer angebracht sind.

5. Maschine nach den Ansprüchen 1 und 4, dadurch gekennzeichnet, daß hinter zumindest einem der Trennmittel (10) eine aus einem zylindrischen, konischen Element (11) gebildete Fördervorrichtung drehbar angebracht ist, die an ihrer Außenfläche mit einer Schnecke (12) versehen ist, wobei das konische Element (11) neigbar ist und über ein Kardangelenk mit Antriebsmitteln verbunden ist, und wobei ein Führungselement aus Blech über dem konischen Element angebracht ist.

6. Maschine nach Anspruch 1, dadurch gekennzeichnet, daß die zylindrische Dreschtrommel (17) einen konischen und mit einer Führungsschnecke für die Rispen versehenen oder mit einer schneckenartig angeordneten Abfolge von Schlaufen versehenen Einlaß aufweist.

7. Maschine nach Anspruch 1, dadurch gekennzeichnet, daß die zylindrische Dreschtrommel (17) an ihrer Außenfläche über die Länge und den gesamten Umfang hinweg mit beabstandeten Schlaufen (26) versehen ist, die sich radial von der Oberfläche der Trommel weg erstrecken.

8. Maschine nach Anspruch 1, dadurch gekennzeichnet, daß die Gegendreschtrommel (21) durch ein durchlöchertes Blech gebildet wird, das sich um den gesamten Umfang der zylindrischen Dreschtrommel (17) erstreckt und dadurch, daß die Maschine zwei Förderschnecken (13, 22) zum Abtransport des Kornes, das sich im hinteren Teil der Dreschkammer (16) beidseitig der Öffnung (30) zum Durchlassen der Halme ansammelt, aufweist.

9. Maschine nach Anspruch 1, dadurch gekennzeichnet, daß die Gegendreschtrommel durch ein ebenes Blech (34), das sich um einen Teil des Umfanges der Dreschtrommel (17) erstreckt, gebildet wird, wobei die Gegendreschtrommel Gegenzapfen (35) aufweist, die mit den Zapfen oder Schlaufen (26) der Dreschtrommel (17) zusammenwirken.

10. Maschine nach Anspruch 1, dadurch gekennzeichnet, daß die Dreschtrommel (17) durch eine Trommel gebildet wird, die auf ihrer Oberfläche mit aus runden, radialen oder nach hinten geneigten Stäben gebildeten Zapfen versehen ist.

11. Maschine nach Anspruch 1, dadurch gekennzeichnet, daß die Dreschtrommel durch eine ebene Bürste gebildet wird.

12. Maschine nach Anspruch 1, dadurch gekennzeichnet, daß die Maschine aus mehreren Drescheinheiten (16) gebildet wird, die Seite an Seite angebracht sind, um eine Maschine großer Breite und großer Verarbeitungskapazität zu erhalten.

13. Maschine nach Anspruch 1, dadurch gekennzeichnet, daß der Teiler und die Zuführung eine Neigung und eine Form aufweisen, so daß man eine stark zunehmende Anhebung der Halme erhält.

14. Maschine nach Anspruch 1, dadurch gekennzeichnet, daß die Dreschelemente durch achsiale oder radiale gerippte Balken gebildet werden.

Fig.1

Fig-1a

Fig-2

Fig-3

Fig-8

Fig-7

Fig-4

Fig-5

Fig-6

*Fig. 9*

*Fig. 10*

36

Fig. 11

Fig. 11a